# EUROPÄISCHE PATENTSCHRIFT

(11) **EP 1 989 465 B1**
(45) Veröffentlichungstag und Bekanntmachung des Hinweises auf die Patenterteilung: **12.01.2011**
(21) Anmeldenummer: 07704541.7
(22) Anmeldetag: 13.02.2007
(51) Int. Cl.: F16F 15/26, F01M 11/00

(54) **VORRICHTUNG ZUM KRÄFTE- UND/ODER MOMENTENAUSGLEICH FÜR BRENNKRAFTMASCHINEN**
DEVICE FOR COMPENSATING FORCES AND/OR TORQUES FOR INTERNAL COMBUSTION ENGINES
DISPOSITIF D'EQUILIBRAGE DES FORCES ET/OU DES MOMENTS POUR MOTEURS A COMBUSTION INTERNE

(30) Priorität: 25.02.2006 DE 202006003027 U; 26.06.2006 DE 102006029554
(43) Veröffentlichungstag der Anmeldung: 12.11.2008
(73) Patentinhaber: Pierburg GmbH, 41460 Neuss (DE)
(72) Erfinder: JÖRGENS, Ralph, 40667 Meerbusch (DE); KLAAR, Roland, Kurt, 42929 Wermelskirchen (DE); CERVEIRA, Paulo, 42653 Solingen (DE)
(74) Vertreter: Ter Smitten, Hans
(86) Internationale Anmeldenummer: PCT/EP2007/051365
(87) Internationale Veröffentlichungsnummer: WO 2007/096270

(56) Entgegenhaltungen:
- EP-A1- 0 260 174
- EP-A1- 1 081 344
- GB-A- 2 390 873
- US-A- 5 535 643

## Beschreibung

Die Erfindung betrifft eine Vorrichtung zum Kräfte- und/oder Momentenausgleich für Brennkraftmaschinen, insbesondere Kolbenmotoren.

Je nach Anzahl der Zylinder sowie nach Bauart ist es bei Brennkraftmaschinen erforderlich, die auftretenden Kräfte und/oder Momente auszugleichen. Zum Ausgleich von Kräften werden vorzugsweise zwei Ausgleichswellen mit exzentrisch angeordneten Gewichten vorgesehen, die einander entgegengesetzte Drehrichtungen aufweisen. Zum Ausgleich von Momenten wird üblicherweise eine Ausgleichswelle vorgesehen, deren Drehrichtung der Drehrichtung der Kurbelwelle entgegengesetzt sein muss. Die Ausgleichswellen werden hierbei, beispielsweise wie über eine Kette, mit einem direkt an der Kurbelwelle angeordneten Zahnrad verbunden. Ebenso ist es möglich, ein mit der Kurbelwelle verdrehsicher verbundenes Zahnrad unmittelbar mit einem auf einer der Ausgleichswellen verdrehsicher angeordneten Zahnrad zu verbinden. Gegebenenfalls ist zwischen den beiden Zahnrädern ein Getriebe zwischengeschaltet. Beim Vorsehen mehrerer Ausgleichswellen können diese wiederum über die Zahnräder miteinander verbunden sein.

Ferner ist es aus DE 298 16 658 U bekannt, auf einer Ausgleichswelle drehfest ein Förderrad einer Ölpumpe anzuordnen. Die Ölpumpe ist somit einer Ausgleichswelle nachgeordnet, so dass zunächst die Kurbelwelle mit der Ausgleichswelle und diese sodann mit der Ölpumpe verbunden ist. Durch das Verbinden einer Ölpumpe mit der Ausgleichswelle kann ein gesonderter Antrieb einer Ölpumpe vermieden werden.

Aus DE 100 07 660 ist eine Vorrichtung zum Kräfte- und/ oder Momentenausgleich mit zwei Ausgleichswellen bekannt, die in einem gemeinsamen Gehäuse angeordnet sind. Dieses Gehäuse weist ferner einen Hohlraum auf, in dem eine mit einer der Ausgleichswellen verbundene Ölpumpe angeordnet ist.

GB 2 390 873-A. offenbart eine Vorrichtung gemäss dem kennzeichnenden Teil des Ansprüchs 1.

Generell besteht bei Ölpumpen die Problematik, dass die Förderleistung der Ölpumpe motorspezifischen Erfordernissen angepasst sein muss. Um beispielsweise bei auch geringen Motordrehzahlen eine entsprechende Förderleistung zu gewährleisten, sind Ölpumpen häufig überdimensioniert.

Aufgabe der Erfindung ist es, eine Vorrichtung zum Ausgleich von Kräften und/ oder Momenten derart mit einer Verdrängereinrichtung, wie einer Ölpumpe, zu kombinieren, dass der erforderliche Bauraum verringert ist.

Die Lösung der Aufgabe erfolgt erfindungsgemäß durch die Merkmale des Anspruchs 1.

Die erfindungsgemäße Vorrichtung zum Ausgleich von Kräften und/ oder Momenten für Brennkraftmaschinen weist mindestens eine rotierende Ausgleichswelle zum Ausgleich von Kräften und/ oder Momenten auf.

Ferner weist die Vorrichtung eine Verdrängereinrichtung, wie eine Ölpumpe, zum Versorgen der Brennkraftmaschine mit Öl auf. Sowohl die mindestens eine Ausgleichswelle als auch die Verdrängereinrichtung werden über die Kurbelwelle mittelbar oder unmittelbar angetrieben. Hierbei kann beispielsweise die mindestens eine Ausgleichswelle unmittelbar über eines oder mehrere Ritzel oder auch über eine Kette mit der Kurbelwelle verbunden sein. Ferner weist die Vorrichtung zur Drehzahlanpassung ein Getriebe auf. Durch das Getriebe kann die Drehzahl der Verdrängereinrichtung und ggf. auch die Drehzahl der mindestens einen Ausgleichswelle relativ zur Drehzahl der Kurbelwelle unter- oder übersetzt werden. Die Vorrichtung zum Ausgleich von Kräften und/ oder Momenten weist somit mindestens eine Ausgleichswelle, eine Verdrängereinrichtung sowie ein Getriebe auf. Erfindungsgemäß sind diese drei Bauteile in einem gemeinsamen Gehäuse angeordnet. Hierdurch ist es möglich, den erforderlichen Bauraum erheblich zu reduzieren. Dies kann insbesondere dadurch erzielt werden, dass ein zur Anpassung der Drehzahl der mindestens einen Ausgleichwelle vorhandenes Getriebe zusätzlich auch zur Drehzahlveränderung der Verdrängereinrichtung genutzt wird. Ferner weist das Vorsehen eines gemeinsamen Gehäuses den Vorteil auf, dass die gesamte Einrichtung auf einfache Weise vormontiert werden kann und sodann das gemeinsame Gehäuse beispielsweise am Kurbelwellengehäuse angeordnet werden kann.

Vorzugsweise weist das Gehäuse eine Getriebekammer auf, in der das Getriebe aufgenommen ist. In besonders bevorzugter Ausführungsform weist das Gehäuse ferner eine Verdrängereinrichtungskammer zur Aufnahme der Verdrängereinrichtung sowie eine Ausgleichswellenkammer zur Aufnahme der mindestens einen Ausgleichswelle auf. Hierbei ist es auf einfache Weise möglich, die Ausgleichswellenkammer gegenüber der Getriebekammer abzudichten, so dass in der Ausgleichswellenkammer beispielsweise nur eine geringe Menge an Öl, die zur Schmierung der entsprechenden Lager dient, vorhanden ist und die mindestens eine Ausgleichswelle nicht vollständig innerhalb des Öls angeordnet ist.

Um die Montage zu vereinfachen ist die Verdrängereinrichtungskammer vorzugsweise taschenartig ausgebildet. Hierbei weist die Tasche vorzugsweise eine im Wesentlichen radial zu den Drehachsen des Getriebes angeordnete Öffnung auf. Durch diese können die Getrieberitzel zur Montage auf einfache Weise in die Tasche eingesetzt werden. Durch Einstecken der entsprechenden Wellen können die Getrieberitzel sodann mit entsprechenden Wellen drehfest verbunden oder auf eingesteckten Achsen drehbar gelagert werden.

Bei einer weiteren bevorzugten Ausführungsform weist die Vorrichtung zusätzlich eine Synchronisationseinrichtung zur Synchronisation von zwei vorgesehenen Ausgleichswellen auf. Die Synchronisationseinrichtung ist vorzugsweise in einer gesonderten Synchronisationskammer angeordnet, die gegenüber der Ausgleichswellenkammer wiederum im Wesentlichen abgedichtet sein kann. Die Synchronisationseinrichtung ist vorzugsweise mittelbar oder unmittelbar mit der Kurbelwelle verbunden.

Zusätzlich zu der Verdrängungseinrichtung kann in demselben Gehäuse eine Vakuumpumpe vorgesehen sein. Hierbei ist es besonders bevorzugt, dass die Vakuumpumpe neben der Verdrängungseinrichtung angeordnet ist, so dass insbesondere die beiden Pumpenachsen im Wesentlichen parallel zueinander verlaufen, Der Antrieb der Vakuumpumpe kann hierbei über das zwischen der mindestens einen Ausgleichswelle und der Verdrängungseinrichtung angeordnete Getriebe erfolgen.

Nachfolgend wird die Erfindung anhand einer bevorzugten Ausführungsform unter Bezugnahme auf die anliegenden Zeichnungen näher erläutert.

Es zeigen:
- Fig. 1: eine schematische perspektivische Ansicht des gemeinsamen Gehäuses,
- Fig. 2: eine schematische perspektivische Ansicht einer bevorzugten Ausführungsform der erfindungsgemäßen Vorrichtung,
- Fig. 3: eine schematische Explosionszeichnung der wesentlichen Bauteile der in der Fig. 2 dargestellten Ausführungsform, und

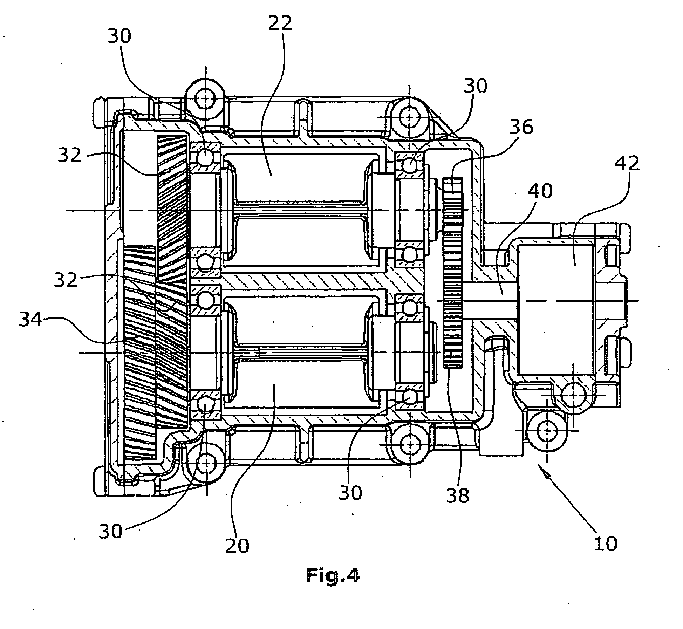

- Fig. 4: eine schematische Schnittansicht der in Fig. 3 dargestellten Ausführungsform.

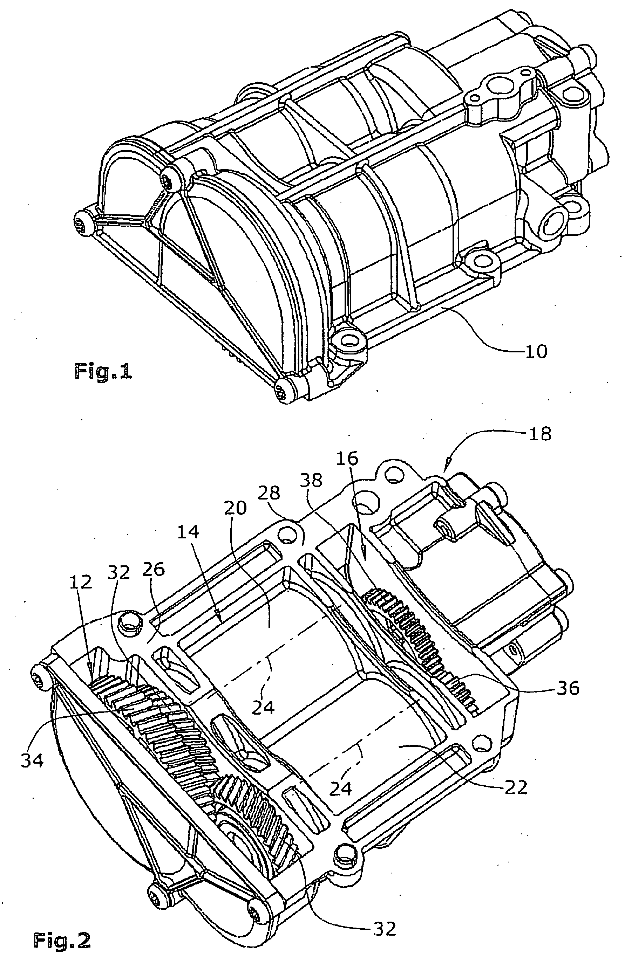

Das gemeinsame Gehäuse 10, das in Fig. 1 in einer perspektivischen Ansicht der Unterseite dargestellt ist, weist mehrere Kammern 12, 14, 16, 18 auf. In einer Ausgleichswellenkammer 14 sind im dargestellten Ausführungsbeispiel zwei Ausgleichswellen 20, 22 angeordnet, die jeweils um Längsachsen 24 drehbar sind. Die Lagerung der beiden Ausgleichswellen 20, 24 erfolgt über in Zwischenwände 26, 28 angeordnete Lager 30, bei denen es sich vorzugsweise um Wälzkörperlager handelt.

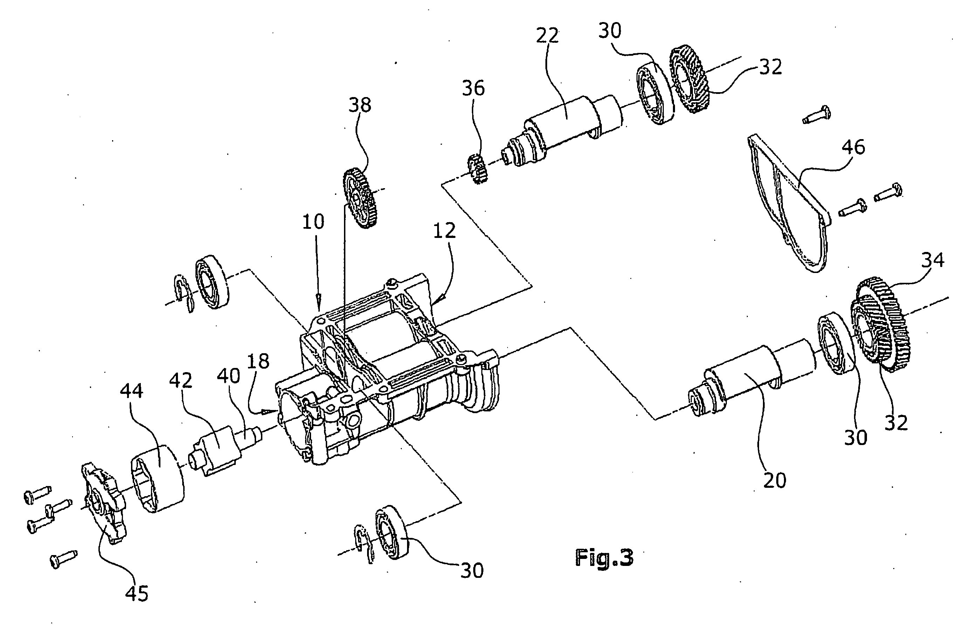

In einer Synchronisierungseinrichtungskammer 12, die gegenüber der Ausgleichswellenkammer 14 vorzugsweise im Wesentlichen abgedichtet ist, sind die beiden Synchronisationsritzel 32 angeordnet. Die Synchronisationsritzel 32 sind mit den Ausgleichswellen 20, 22 drehfest verbunden. Dies erfolgt beispielsweise mittels einer Presspassung oder einer formschlüssigen Verbindung. Ferner ist im dargestellten Ausführungsbeispiel in der Synchronisationseinrichtungskammer 12 ein Antriebsritzel 34 angeordnet. Das Antriebsritzel 34 ist ebenfalls auf einer der beiden Ausgleichswellen, im dargestellten Ausführungsbeispiel auf der Ausgleichswelle 20, angeordnet. Besonders bevorzugt ist es, die Ritzel 32, 34 einstückig auszubilden (Fig. 3). Das Ritzel 34 kämmt mit einem nicht dargestellten, mit der Kurbelwelle drehfest verbundenen Zahnrad oder ist über eine Kette angetrieben.

In einer Getriebekammer 16 sind im dargestellten Ausführungsbeispiel zwei Getriebezahnräder 36, 38 angeordnet. Das Getriebezahnrad 36 ist mit der Ausgleichswelle 22 drehfest verbunden und somit von dieser angetrieben. Das Ritzel 36 kämmt mit dem Ritzel 38, das einen größeren Durchmesser aufweist, so dass eine Untersetzung erfolgt. Das Ritzel 38 ist sodann mit einer Pumpenwelle 40 (Fig. 3) drehfest verbunden, wobei dies vorzugsweise durch Aufpressen oder eine formschlüssige Verbindung erfolgt.

Anstelle eines Zahnradgetriebes, das im dargestellten Ausführungsbeispiel zwei Ritzel 36, 38 umfasst, kann auch ein einstellbares Getriebe vorgesehen sein. Hierbei kann die Einstellung vorzugsweise in Abhängigkeit des fur den momentanen Betriebszustand der Brennkraftmaschine erforderlichen Fördervolumens erfolgen. Beispielsweise kann das Getriebe Kegelräder aufweisen.

In der Verdrängungseinrichtungskammer 18 ist beispielsweise eine Ölpumpe mit geeigneten Verdrängungselementen 42, 44 angeordnet.

Zur Montage (Fig. 3) werden zunächst die Lager 30 in der Zwischenwand 28 angeordnet. Anschließend kann die Ausgleichswelle 22 mit dem vormontierten Ritzel 36, dem Lager 30 und dem Ritzel 32 in das Gehäuse eingesteckt werden. Die Ausgleichswelle 20, deren Ende nicht in die Getriebekammer 16 ragt, kann ebenfalls mit vormontiertem Lager 30 und mit vormontierten Ritzeln 32, 34 in das Gehäuse 10 eingesteckt werden.

Anschließend wird in Fig. 3 von links die Pumpenwelle 40 in die Verdrängereinrichtungskammer eingesetzt und das Ende der Welle 40 mit dem sich in der Getriebekammer 16 befindlichen Zahnrad 38 verbunden. Nach Einsetzen der Verdrängungselemente 42, 44 in die Verdrängungseihrichtungskammer 18 wird diese mit einem Deckel 44 verschlossen.

Die Synchronisationseinrichtungskammer 12 wird mit einem Deckel 46 verschlossen. Das Gehäuse 10 ist somit in Fig. 3 nur noch nach einer Seite hin offen. Über entsprechende Passungen und Bohrungen kann das Gehäuse 10 sodann von unten an dem Kurbelgehäuse befestigt werden.

Die Einleitung des Drehimpulses kann auch über die Ölpumpe 42 oder eine zusätzlich vorgesehene Vakuumpumpe erfolgen. Der Antrieb würde so in Fig. 2 über die rechte Seite erfolgen. Das Zahnrad 34 kann sodann entfallen.

Ferner ist es möglich, die Einheit über das Zahnrad 38 des Getriebes 16 anzutreiben. Diese Anordnung hat den Vorteil, dass die Einleitung der Kräfte und Momente nicht an einem Ende, sondern über ein innenliegendes Zahnrad erfolgt.

Wie ferner insbesondere aus Fig. 2 ersichtlich ist, weist das erfindungsgemäße gemeinsame Gehäuse 10 eine einzige Montagefläche auf, wodurch die Herstellungskosten verringert sind.

## Patentansprüche

1. Vorrichtung zum Kräfte- und/ oder Momentenausgleich für Brennkraftmaschinen, mit
mindestens einer rotierenden Ausgleichswelle (20, 22) zum Ausgleich von Kräften und/ oder Momenten,
einer Verdrängungseinrichtung (42) zum Versorgen der Brennkraftmaschine mit Öl,
wobei die mindestens eine Ausgleichswelle (20, 22) und die Verdrängungseinrichtung (42) zum Antrieb mit einer Kurbelwelle der Brennkraftmaschine verbunden sind, und
einem Getriebe (36, 38) zur Uber- und/ oder Untersetzung der Drehzahl der mindestens einen Ausgleichswelle (20, 22) und der Verdrängungseinrichtung (42) relativ zur Drehzahl der Kurbelwelle,
**dadurch gekennzeichnet, dass**
die mindestens eine Ausgleichswelle (20, 22), die Verdrängereinrichtung (42) und das Getriebe (36, 38) in einem gemeinsamen Gehäuse (10) angeordnet sind.

2. Vorrichtung nach Anspruch 1, **dadurch gekennzeichnet, dass** das Gehäuse (10) eine Getriebekammer (16) zur Aufnahme des Getriebes (36, 38) aufweist.

3. Vorrichtung nach Anspruch 1 oder 2, **dadurch gekennzeichnet, dass** das Gehäuse (10) eine Verdrängereinrichtungskammer (18) zur Aufnahme der Verdrängungseinrichtung (42, 44) aufweist.

4. Vorrichtung nach einem der Ansprüche 1 bis 3, **dadurch gekennzeichnet, dass** das Gehäuse (10) eine Ausgleichswellenkammer (14) zur Aufnahme der Ausgleichswellen (20, 22) aufweist.

5. Vorrichtung nach einem der Ansprüche 1 bis 4, **dadurch gekennzeichnet, dass** die Getriebekammer (16) taschenartig ausgebildet ist, so dass die Getrieberitzel (36, 38) zur Montage im Wesentlichen radial zur Drehachse einsetzbar sind.

6. Vorrichtung nach einem der Ansprüche 1 bis 5, **gekennzeichnet durch** eine Synchronisationseinrichtung (32) zur Synchronisation von zwei Ausgleichswellen (20, 22).

7. Vorrichtung nach Anspruch 6, **dadurch gekennzeichnet, dass** die Synchronisationseinrichtung (32) in einer Synchronisationskammer (12) angeordnet ist.

8. Vorrichtung nach Anspruch 5 oder 6, **dadurch gekennzeichnet, dass** die Synchronisationseinrichtung (32) insbesondere über ein Zwischenritzel (34) mit der Kurbelwelle verbunden ist.

9. Vorrichtung nach einem der Ansprüche 5 bis 8, **dadurch gekennzeichnet, dass** die Synchronisationseinrichtung (32) und das Getriebe (36, 38) jeweils auf einer Seite der Ausgleichswelle (20, 22) angeordnet sind.

10. Vorrichtung nach einem der Ansprüche 1 bis 9, **dadurch gekennzeichnet, dass** das Getriebe (36, 38) zwischen der Ausgleichswelle (20, 22) und der Verdrängungseinrichtung (42) angeordnet ist.

11. Vorrichtung nach einem der Ansprüche 1 bis 10**, dadurch gekennzeichnet, dass** innerhalb des gemeinsamen Gehäuses, vorzugsweise in einer gesonderten Kammer, eine Vakuumpumpe angeordnet ist.

## Claims

1. A device for compensating forces and/or torques for internal combustion engines, comprising
at least one rotating balance shaft (20, 22) for compensating the forces and/or torques,
an expeller device (42) for supplying the internal combustion engine with oil,
wherein, for being driven, said at least one balance shaft (20, 22) and the expeller device (42) are connected with a crankshaft of the internal combustion engine, and
a transmission (36, 38) for increasing and/or reducing the speed of the at least one balance shaft (20, 22) and of the expeller device (42) with respect to the speed of the crankshaft,
**characterized in that**
the at least one balance shaft (20, 22), the expeller device (42) and the transmission (36, 38) are arranged in a common housing (10).

2. The device of claim 1, **characterized in that** the housing (10) comprises a transmission chamber (16) for accommodating the transmission (36, 38).

3. The device of claim 1 or 2, **characterized in that** the housing (10) comprises an expeller device chamber (18) for accommodating the expeller device (42, 44).

4. The device of one of claims 1 to 3, **characterized in that** the housing (10) comprises a balance shaft chamber (14) for accommodating the balance shafts (20, 22).

5. The device of one of claims 1 to 4, **characterized in that** the transmission chamber (16) is of a pocket-like design so that, for mounting purposes, the transmission pinions (36, 38) can be placed substantially radially to the rotational axis.

6. The device of one of claims 1 to 5, **characterized by** a synchronization device (32) for synchronizing two balance shafts (20, 22).

7. The device of claim 6, **characterized in that** the synchronization device (32) is arranged in a synchronization chamber (12).

8. The device of claim 5 or 6, **characterized in that** the synchronization device (32) is connected with the crankshaft in particular via an intermediate pinion (34).

9. The device of one of claims 5 to 8, **characterized in that** the synchronization device (32) and the transmission (36, 38) are arranged on one side of the balance shaft (20, 22), respectively.

10. The device of one of claims 1 to 9, **characterized in that** the transmission (36, 38) is arranged between the balance shaft (20, 22) and the expeller device (42).

11. The device of one of claims 1 to 10, **characterized in that** a vacuum pump is arranged within the common housing, preferably in a separate chamber.

## Revendications

1. Dispositif d'équilibrage des forces et/ou des moments pour moteurs à combustion interne, comprenant
au moins un arbre d'équilibrage (20, 22) pour équilibrer des forces et/ou des moments,
un moyen de déplacement (42) pour alimenter le moteur à combustion interne en huile,
ledit au moins un arbre d'équilibrage (20, 22) et ledit moyen de déplacement (42) étant connectés, pour leur entrainement, à un vilebrequin dudit moteur à combustion interne, et
un engrenage (36, 38) pour augmenter et/ou réduire la vitesse dudit au moins un arbre d'équilibrage (20, 22) et dudit moyen de déplacement (42) par rapport à la vitesse du vilebrequin,
**caractérisé en ce que**
ledit au moins un arbre d'équilibrage (20, 22), ledit moyen de déplacement (42) et ledit engrenage (36, 38) sont disposés dans un carter commun (10).

2. Dispositif selon la revendication 1, **caractérisé en ce que** ledit carter (10) comprend une chambre d'engrenage (16) pour recevoir ledit engrenage (36, 38).

3. Dispositif selon les revendications 1 ou 2, **caractérisé en ce que** ledit carter (10) comprend une chambre de moyen de déplacement (18) pour recevoir ledit moyen de déplacement (42, 44).

4. Dispositif selon l'une quelconque des revendications 1 à 3, **caractérisé en ce que** ledit carter (10) comprend une chambre d'arbre d'équilibrage (14) pour recevoir les arbres d'équilibrage (20, 22).

5. Dispositif selon l'une quelconque des revendications 1 à 4, **caractérisé en ce que** ladite chambre d'engrenage (16) est réalisée comme une poche, de sorte que, pour l'assemblage, les pignons d'engrenage (36, 38) peuvent être placés sensiblement radialement par rapport à l'axe de rotation.

6. Dispositif selon l'une quelconque des revendications 1 à 5, **caractérisé par** un moyen de synchronisation (32) pour la synchronisation de deux arbres d'équilibrage (20, 22).

7. Dispositif selon la revendication 6, **caractérisé en ce que l**e moyen de synchronisation (32) est disposé dans une chambre de synchronisation (12).

8. Dispositif selon les revendications 5 ou 6, **caractérisé en ce que** le moyen de synchronisation (32) est relié au vilebrequin en particulier par un pignon intermédiaire (34).

9. Dispositif selon l'une quelconque des revendications 5 à 8, **caractérisé en ce que** ledit moyen de synchronisation (32) et ledit engrenage (36, 38) sont respectivement disposés sur un côté dudit arbre d'équilibrage (20, 22).

10. Dispositif selon l'une quelconque des revendications 1 à 9, **caractérisé en ce que** ledit engrenage (36, 38) est disposé entre ledit arbre d'équilibrage (20, 22) et ledit moyen de déplacement (42).

11. Dispositif selon l'une quelconque des revendications 1 à 10, **caractérisé en ce qu'**une pompe à vide est disposée dans ledit carter commun, de préférence dans une chambre séparée.
